# EUROPEAN PATENT APPLICATION

(11) **EP 2 775 228 A1**
(43) Date of publication of application: **10.09.2014**
(21) Application number: 14000732.9
(22) Date of filing: 28.02.2014
(51) Int. Cl.: F24H 1/28, F24D 11/00, F24D 17/00

(54) **Combined storage tank**

(30) Priority: 05.03.2013 IT AN20130044
(71) Applicant: Sunerg Solar S.r.L., 06010 Cinquemiglia - Città di Castello (PG) (IT)
(72) Inventor: Lauri, Daniele, I - 06012 Città di Castello (PG) (IT)
(74) Representative: Premru, Rok

(57) **Abstract**

The present invention describes a storage tank (1, 1a, 1b) comprising at least one storage (1a), in vertical position, adapted to contain a water reserve for the supply of a room heating circuit, at least one heat generator (2) integrated in said storage tank (1) and at least one heat exchanger (3), internal to said storage (1a).

Said heat exchanger (3) is a tube bundle exchanger comprising a plurality of fire tubes (31) parallel to each other, inclined relative to a vertical plane orthogonal to the base (14) of said storage tank (1) and accessible from the outside through at least one opening lid (6, 7).

## Description

The object of the present invention is a storage tank integrating at least one heat generator according to the growing demands of the market and to the most recent regulatory provisions on energy efficiency incentive.

More precisely, the object of the present invention is a storage tank comprising, integrated, at least one heat generator capable of bringing the fluid contained therein to the temperatures required for the utilities and the types of use.

The invention therefore falls within the field of alternative energy sources, in particular but not exclusively, within the field of production of energy not coming from fossil fuels, such as the exploitation of solar energy for heating a fluid and/or biomasses long promoted thanks to a tax relief and advantage policy.

In these fields, the main object of said storage tanks (hereinafter also simply referred to as "storages") is, as known, to store and provide the heat produced by "generators" having random and discontinuous operation as necessary.

Said storages are much used in thermal solar installations (i.e. intended for room heating and/or for the production of hot sanitary water) which, due to the inconstancy of the weather conditions in which they operate and the natural changing of the seasons, do not always guarantee the same heat generation.

It is not necessary to dwell long on this "solar technology" as it has been consolidated for decades and the fact that it comprises at least one solar collector capable of capturing the solar radiation, a solar circuit for the connection to said storage tank (typically placed outside or inside a building, and in turn connected to at least one circuit for room heating and/or for the production of sanitary hot water), and a heat exchanger thereof through which the heat exchange occurs between a heat transfer fluid (also called "solar fluid"), circulating in said solar circuit, and a usage fluid, generally the water to be heated, contained in said tank, is now known not only to the man skilled in the art.

The heat exchange is carried out in such a way that water layers are formed in the tank at different temperatures and density, with the hotter water always in the highest part of the tank and the colder one in the proximity of the bottom. In order to optimize and maximize as much as possible said thermal stratification, the storage tank is generally cylindrical in shape and with a high height/diameter ratio.

Of course, solar installations are equally well known in which the solar fluid coincides with that of use; that is, installations in which the heat exchanger is not provided.

It should be reiterated that the solar system alone is not always sufficient to bring the fluid to the temperatures required for the utilities, as is often the case, as mentioned, during a rainy day or as a result of the reduced sun in winter.

In order to overcome this drawback, the use of at least one auxiliary heat generator is already provided, external to the tank, which can be activated when the energy supply from the solar circuit is insufficient or there is an abnormal and excessive water consumption.

By way of example, said at least one auxiliary heat generator is a traditional domestic boiler but nothing prevents the possibility of using alternative generators such as heat pumps, biomass boilers or devices having an equivalent operation.

Such auxiliary generators are generally placed at a considerable distance from the storage tank, said storage tanks being usually installed on the roof of a building or, alternatively, in its attic or in special annexes; therefore, it is understood that the connection between said auxiliary generators and the relative storage tank can be realized only by means of particularly long hydraulic circuits, with all the well-known consequences (significant load losses along the circuit and a greater risk of breakage, problems sizing and choosing the auxiliary generator, etc.).

Moreover, the storage tank must be set up for the coupling with such external auxiliary heat generators or be provided with a plurality of connection sockets to the above hydraulic circuits; this entails an unavoidable constructive and structural complication of the tank itself, in addition to introducing the discontinuity areas in the insulating coating thereof, required for the minimization of heat losses and of the consequent abnormal cooling of the water contained therein.

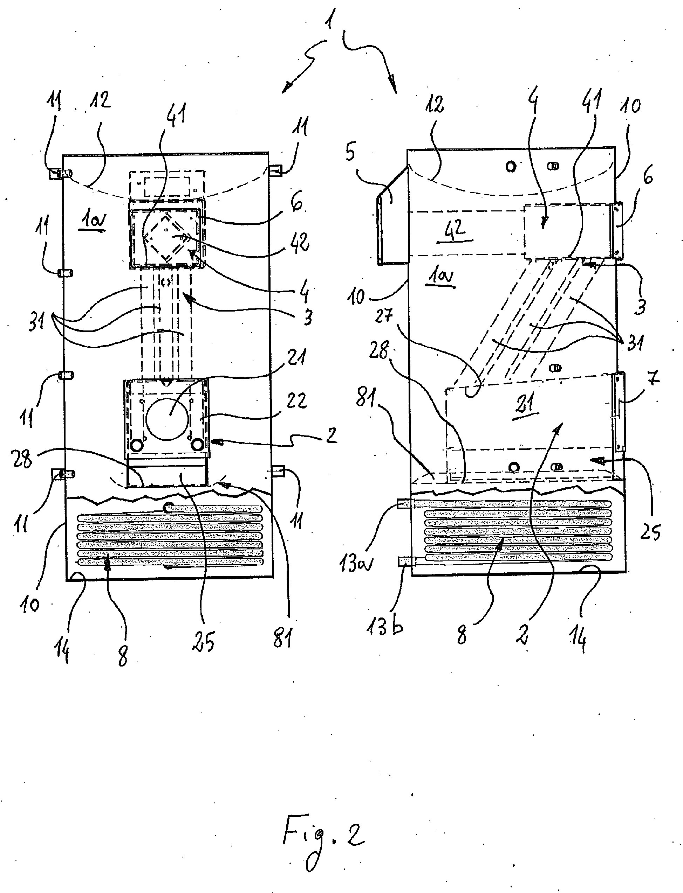

For more information on the methods of connection to external auxiliary heat generators, reference shall be made for example to fig. 2 of patent IT 1383716 by the same Applicant.

The object of the present invention is to eliminate at least a part of the above drawbacks by providing a storage tank able to integrate, in a compact, rational manner and with minimum footprint, at least a first heat generator, with particular exchange effectiveness, for heating the water reserve contained therein and for room heating.

In particular, the object of the present invention is to provide a "solar" storage tank comprising, said integrated heat generator employing energy sources alternative to traditional fossil fuels.

A further object of the invention is to provide an innovative combined storage tank, said tank being able to integrate said first heat generator and/or a hot sanitary water reserve and/or be connected to a solar system.

A further object of the invention is to provide an innovative storage tank capable of ensuring the required thermal stratification.

These and other objects, which will become clear hereinafter, are achieved with a storage tank according to the indications of the accompanying claims.

Further features of the present invention shall be better highlighted by the following description of some preferred embodiments, in accordance with the patent claims and illustrated, by way of a non-limiting example, in the accompanying drawing tables, in which:
- figure 1 shows a front view and a side view of the storage tank according to a first variant of the invention;
- figure 1b shows an axonometric view of the storage tank of fig. 1a;
- figure 2 shows a partly cutaway front view and side view of the storage tank according to a second variant of the invention;
- figure 3 shows a front view and a side view of the storage tank according to a third variant of the invention;
- figure 4 shows a partly cutaway front view and side view of the storage tank according to a fourth variant of the invention.

The features of the invention are now described using the references in the figures. The terms "upper"/"lower", "vertical"/"horizontal" or similar spatial references used hereinafter refer to the position in which the elements appear in the figures, without any reference, unless otherwise stated, to their position under operative conditions.

All components of the storage tank of the invention common to those of the prior art shall not be listed and described except to mention those from time to time required.

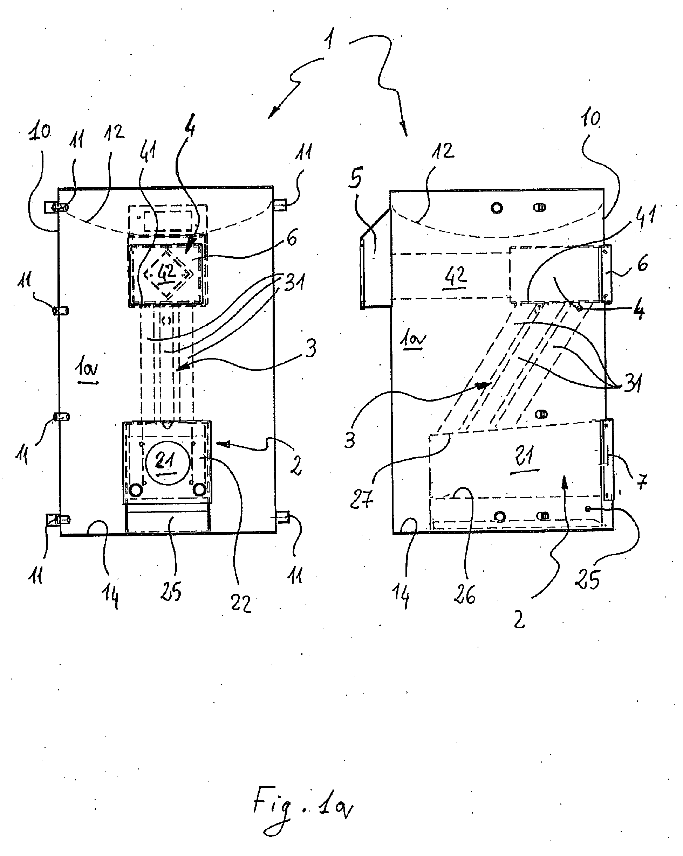

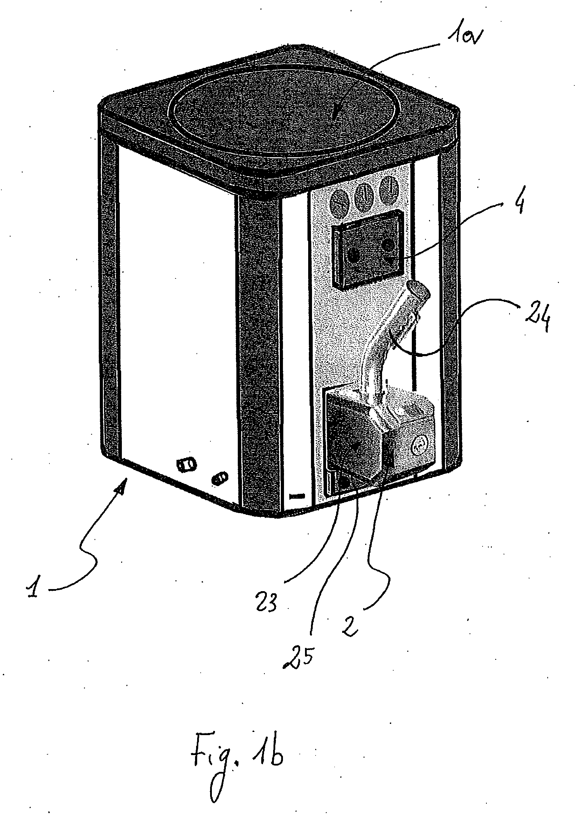

With reference to fig. 1 and according to the prior art, reference numeral 1 shows a storage tank, in vertical position, comprising a first storage (also called "first puffer 1a") adapted to contain the water reserve (or more generically a "usage fluid") for supplying a room heating circuit.

Of said tank 1, reference numeral 10 indicates the outer skirt thereof, on which as known, at different heights, there is provided a plurality of coupling sleeves 11 to the delivery and return ducts (not shown) of said room heating circuit and/or, for reasons that shall only later be understood, of a possible circuit for the hot sanitary water and/or any auxiliary circuits.

On the other hand, reference numeral 2 indicates an inner heat generator integrated with storage 1a intended to heat the water contained therein through a heat exchanger 3, inner as well.

The cylindrical geometry of 1, its high height/diameter ratio, the positioning of the heat generator 2 arranged, in the variant that is being described, substantially in the proximity of bottom 14 of tank 1 and of the relative exchanger 3, as well as the caution to introduce and withdraw the water therein at the area that has the same temperature thereof concur, as known, to optimize the stratification phenomenon, ensuring that the warmer layers are always in the upper part of tank 1 and the colder ones in the proximity of bottom 14 thereof.

For the reasons which shall be understood hereinafter, storage 1a of the first storage tank 1 is provided with an upper cover 12 mounted "upturned", i.e. with the concavity facing upwards.

What said thus far does not substantially depart from the prior art.

According to the invention, the heat generator 2 is a combustion unit 2, for example of the type employing traditional fossil fuels or fuels from alternative/renewable sources.

Preferably, said combustion unit 2 uses pellet; figure 1a only shows the combustion chamber 21 thereof, internal to said first storage, and flange 22 for the engagement of the combustion head 23, which is instead clearly shown in fig 1b (wherein the pellet loading system 24 is also highlighted).

Said combustion chamber 21, wherein the combustion of the pellet takes place according to known techniques and methods, is communicating, through a grid 26 (or similar means) with an underlying box 25 for collecting the ashes and the combustion waste, removable for the emptying thereof through a hinged front lid 7, while at the top it is connected to the heat exchanger 3, thus susceptible of being traversed by the hot combustion fumes.

According to the invention, said heat exchanger 3, through which the thermal energy of the flue gas of the water contained in storage 1a is yielded, is a tube bundle heat exchanger 3 comprising a plurality of fire tubes 31 parallel to each other and substantially located at the intermediate zone of said tank 1.

As shown in the accompanying figures, the fire tubes 31 of the heat exchanger 3 are inclined relative to a vertical plane orthogonal, e.g., to base 14 of the storage tank 1 so as to lengthen the longitudinal development thereof and accordingly increase the heating surface and the relative efficiency.

More precisely, according to a first configuration, the lower ends of said fire tubes 31 are fitted on ceiling 27 of the combustion chamber 21 occupying substantially the distal portion thereof while the upper ends are jointed to bottom 41 of a front chamber 4 for collecting the combustion fumes that will be released to the atmosphere, now cold due to the heat exchange performed through a suction duct 42 located downstream of a possible extractor 5, external to tank 1 and communicating with a discharge chimney (not shown).

The inclined arrangement of the fire tubes 31 of the heat exchanger 3 is also particularly suited for cleaning and maintenance operations to which they must be periodically subjected for the removal of solid combustion residues accumulated therein or for the possible insertion and/or replacement of inner turbulators (not shown) adapted, as known, to transform the flow of the combustion fumes from "laminar" to "turbulent" so as to slow them down and improve the heat transfer speed and uniformity.

Such fire tubes 31 are in fact reached, for the execution of such operations, directly from said fumes collecting chamber 4, accessible from the outside through a corresponding opening lid 6.

Of course, nothing prevents said fire tubes 31 from being inclined in an direction opposite to that so far described and shown in the accompanying figures, i.e. in such a way that they extend from the proximal area of ceiling 27 of the combustion chamber 21 in which are fitted towards the rear part of the storage tank 1. In this case, any removable baffles, according to the prior art and not shown, guide the fumes of the distal part of the combustion chamber 21 to said proximal region of ceiling 27.

Such an alternative inclination of the fire tubes 31 allows them to be reached, for the cleaning or maintenance operation of any turbulators, through the same ash collecting box 25 described above accessible from the outside by means of said relative opening lid 7.

Seals in said lids 6, 7 are obviously provided in order to avoid the leakage of the combustion fumes.

Below is a list of some constructive variants of the storage tank 1 as so far described.

In particular, fig. 2 shows the storage tank 1, just described above, set up to be connected also to a solar circuit.

Storage 1a of said first tank 1 therefore includes a second heat exchanger 8 therein, hereinafter referred to as "solar exchanger 8".

According to such a variant, said solar heat exchanger 8 is arranged, with the intent to preserve and promote the above-mentioned stratification phenomenon, in a volume suitably arranged between bottom 14 of storage 1a and the combustion chamber 21 of the combustion unit 2 already described, underneath it.

Additional connecting sleeves 13a and 13b of said solar exchanger 8 to the delivery and return duct of the solar circuit are also provided on skirt 10 of said first storage 1a.

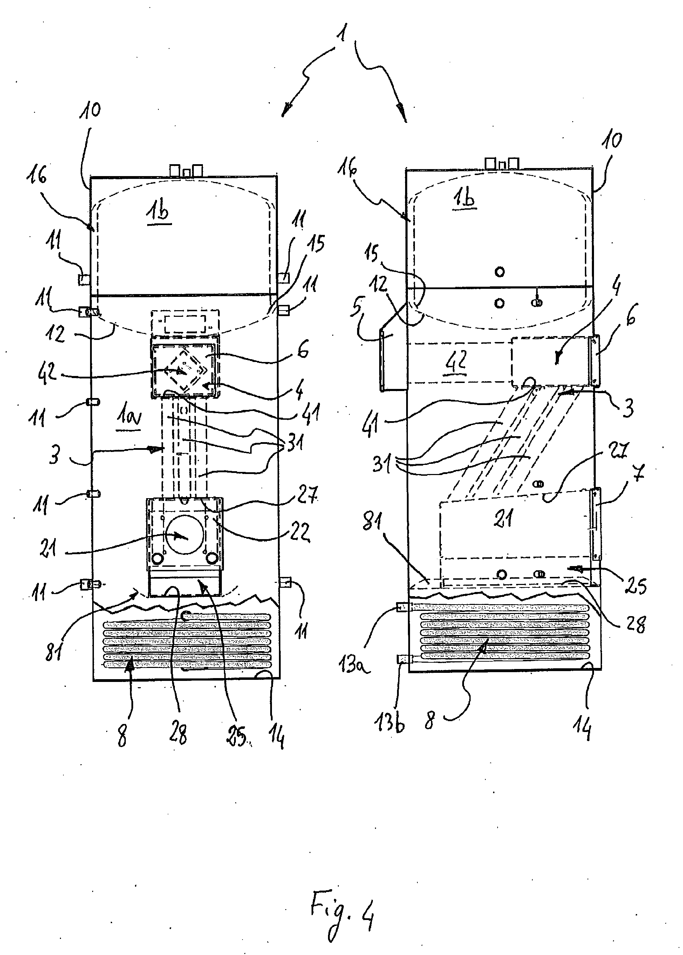

The above thermal stratification is also facilitated by the inclusion of a baffle 81 inserted between said solar heat exchanger 8 and said combustion chamber 21 (see also fig. 4).

According to a possible embodiment, baffle 81, having a substantially rectangular section and having a major dimension substantially equal to the diameter of storage 1a and the minor one lower than the same, can be constrained to base 28 of the ash collecting box 25.

According to the prior art, the solar heat exchanger 8 is a coil heat exchanger, but nothing prevents the use of equivalent devices, also external, for example plates.

According to another variant of the invention, it is possible to provide the storage tank 1 described above both in the "base configuration" (figs. 1a and 1b) and in that with solar integration (fig. 2) with a second storage 1b, of smaller volume, for the production of hot sanitary water (hereinafter called, therefore, "sanitary boiler 1b") according to the specifications and features described in the previous patent IT 1383716 by the same Applicant, to which reference shall be made for any further information or clarification.

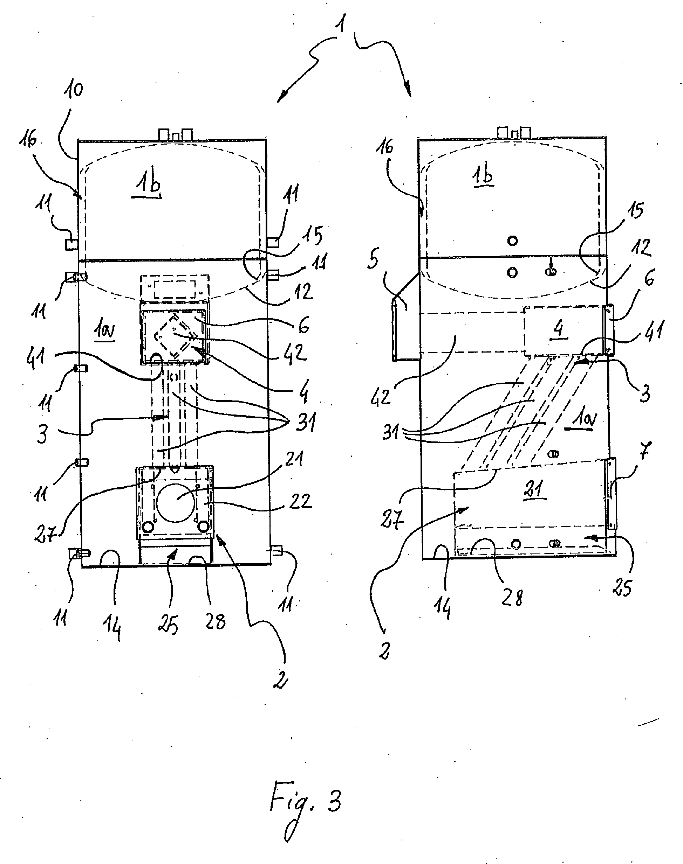

In this venue, please note, according to the accompanying figures 3 and 4, that according to a possible embodiment, which is among the preferred ones, said sanitary boiler 1b is placed externally and superiorly to storage 1a described above in such a way that the lower cover 15 thereof is housed and supported within the upper upturned cover 12 of said storage 1a.

The intimate contact between said covers 15, 12 ensures a good heat transfer between the water of storage 1a and that of the solar boiler 1b while the latter may also comprise a dedicated heat exchanger 16, for example, without any limitation, of the type with "interspace"; said interspace exchanger 16 may consist, for example, of a skirt 16 which surrounds the outside of boiler 1b (see fig. 3 and/or 4) and the heat transfer fluid whereof is the hot water coming, by natural or forced circulation, through special delivery ducts (not shown), from the underlying storage 1a, wherein it is intended to return.

It is clear, as in the case of the presence of a sanitary boiler 1b, it is necessary to provide means to prevent the well-known phenomenon of "legionella", such as one or more electrical resistances immersed in said boiler 1b and susceptible to heat the water contained up to a temperature sufficiently high to prevent such bacterial proliferation, preferably up to a temperature equal to or higher than 60 °C.

Alternatively, the same result can be achieved by providing scheduled ignitions of the heat generator 2 of storage 1a, such as to heat up to such temperatures the heat transfer fluid of the heat exchanger 16 of the sanitary boiler 1b.

The electrical resistances or scheduled ignitions of the integrated heat generator 2 can be advantageously used also as frost protection devices, especially for tanks placed outside of a building.

It is clear that further variants of the storage tank 1, object of the invention, are possible for those skilled in the art, without departing from the novelty scopes of the inventive idea, as well as it is clear that in the practical embodiment of the invention the various components described above may be replaced with technically equivalent ones.

Nothing prevents, for example, said sanitary boiler 1b from being of the traditional type rather than the type described in patent document IT 1383716 by the same Applicant, already cited several times.

That is, nothing prevents the possibility to provide also the traditional "combined storage tanks", such as the well-known "Tank in Tank" or "Combi" tanks available on the market for years, with a similar integrated heat generator 2 and the relative heat exchanger 3 with fire tubes 31.

In fact, it has been experimentally noted that the integration of a pellet heat generator 2 and of the relative exchangers 3 and fume exhaust system into the atmosphere in the variants described above reduces the total useful volume of the storage tank 1 only by about 12-15%, where "useful volume" means the internal volume available for the water to be heated and "standard tank" means the tank currently available to the market in different types and capacities (e.g., whether or not combined).

Finally, nothing prevents the possibility of providing heat generators 2 alternative to the pellet type widely described, e.g. an air-water or water-water heat pump. It is clear that also according to this variant, the heat generated by the heat pump should be introduced within tank 1 in the area substantially occupied, as seen in the preferred variants, by the combustion chamber 21 of the pellet heat generator 2.

From the above discussion it is easy to see that the main advantage of the present invention consists in the possibility of integrating, within a standard storage tank 1 containing water for room heating and/or for sanitary uses, a heat generator 2 without thus affecting the thermal capacity of the same, without increasing the size and the overall dimensions thereof and without impairing the stratification phenomenon and, therefore, its efficiency.

A second order of advantages is to be found in the high "modularity" of such systems, such tanks 1 being able to be supplied with both the solar integration and with a sanitary boiler, or with both solutions.

Said storage tanks 1, with reference to the constructive variants of figs. 3 and 4, also achieve all the advantages listed and discussed extensively in the previous patent IT 1383716 by the same Applicant.

## Claims

1. Storage tank (1; 1a, 1b) comprising:
- at least one vertical storage (1a), adapted to contain a water supply for supplying a room heating circuit
- at least one heat generator (2) integrated in said storage tank (1), said heat generator (2) being a combustion unit (2) the combustion chamber (21) whereof is arranged within said storage (1a) and capable of generating the thermal energy for heating said water supply up to the temperatures required for the utilities
- at least one heat exchanger (3), within said storage (1a), connected to said combustion chamber (21) for being crossed by the combustion smokes generated by said combustion unit (2) and wherethrough said heating is carried out
**characterised in that**
said heat exchanger (3) is a tube bundle exchanger comprising a plurality of fire tubes (31):
- parallel to each other
- inclined relative to a vertical plane orthogonal to the base (14) of said storage tank (1), said inclination increasing the exchanging surface of said heat exchanger (3) and facilitating the cleaning and maintenance of said fire tubes (31),
said fire tubes (31) being accessible from the outside through at least one opening lid (6; 7).

2. Storage tank (1; 1a, 1b) according to claim 1
**characterised in that**
said fire tubes (31) can be reached from a fumes collecting chamber (4) accessible from the outside through an opening lid (6), said fumes collecting chamber (4):
- being inside said storage (1a)
- being in communication with the upper ends of said fire tubes (31) at the bottom (41) thereof
- being in communication with the flue chimney through a suction duct (42).

3. Storage tank (1; 1a, 1b) according to claim 1 or 2
**characterised in that** it further comprises a solar exchanger (8) connected to the delivery and return duct of a solar circuit, said solar exchanger (8) being placed in a volume of said storage (1a) obtained between said bottom (14) of said storage (1a) and said combustion chamber (21) of said heat generator (2).

4. Storage tank (1; 1a, 1b) according to the previous claim
**characterised in that**
a baffle (81) is inserted between said solar exchanger (8) and said combustion chamber (21), said baffle (81) facilitating and optimising the thermal stratification of the water contained in said storage (1a) of said storage tank (1).

5. Storage tank (1; 1a, 1b) according to claim 3 or 4
**characterised in that**
said solar exchanger (8) is a coil exchanger.

6. Storage tank (1; 1a, 1b) according to one or more of the previous claims
**characterised in that** it further comprises a sanitary boiler (1b) for the production of hot sanitary water.

7. Storage tank (1; 1a, 1b) according to the previous claim
**characterised in that**
said sanitary boiler (1b) is of the type described in the previous patent IT1383716 by the same Applicant, the lower cover (15) of said outside sanitary boiler (1b) being housed in and resting on the upper upturned cover (12) of said storage (1a).

8. Storage tank (1; 1a, 1b) according to claim 6 and/or 7
**characterised in that** it comprises anti-legionella means, said anti-legionella means being capable of bringing the water contained in the sanitary boiler (1b) to a sufficiently high temperature to prevent said bacterial proliferation.

9. Storage tank (1; 1a, 1b) according to the previous claim
**characterised in that**
said anti-legionella means consist of at least one electrical resistance immersed in said sanitary boiler (1b).

10. Storage tank (1; 1a, 1b) according to claim 8
**characterised in that**
said anti-legionella means consist of said heat generator (2) subject to scheduled switch-on.

11. Storage tank (1; 1 a, 1b) according to any previous claim
**characterised in that** said heat generator (2) is of the pellet type.

12. Storage tank (1; 1a, 1b) according to the previous claim and to one or more of claims 1 to 4
**characterised in that** said combustion chamber (21) of said heat generator of the pellet type (2) is in communication with an underlying box (25) for collecting the ashes and the combustion waste, said box (25) being removable and accessible from the outside through a lid (7) for facilitating the cleaning and emptying thereof.
